Europäisches Patentamt

European Patent Office

Office européen des brevets

(19)

(11) Veröffentlichungsnummer: **0 030 341**
A2

(12) # EUROPÄISCHE PATENTANMELDUNG

(21) Anmeldenummer: 80107470.9

(22) Anmeldetag: 29.11.80

(51) Int. Cl.³: **D 06 F 39/12**

---

(30) Priorität: 06.12.79 DK 5191/79

(43) Veröffentlichungstag der Anmeldung: 17.06.81
Patentblatt 81/24

(84) Benannte Vertragsstaaten: **AT BE CH DE FR GB IT LI LU NL SE**

(71) Anmelder: **Volund Vaskerimaskiner A/S, DK-5690 Tommerup (DK)**

(72) Erfinder: **Svenningsen, Ole Norman, Henovej 11, DK-5270 Odense SV (DK)**

(74) Vertreter: **Koepsell, Helmut, Dipl.-Ing., Mittelstrasse 7, D-5000 Köln 1 (DE)**

---

(54) **Trommelwaschmaschine.**

(57) Durch die Gestaltung des Gehäuses (2) einer Trommelwaschmaschine als doppelwandiger Mantel und durch die Hindurchführung von Frischwasser durch den von den beiden Wänden begrenzten Zwischenraum (6) wird erreicht, dass das Frischwasser durch das im Innenraum des Gehäuses befindlliche warme Wasser vorgewärmt wird, ehe letzteres in die Kanalisation geleitet wird. Es besteht so auf einfache Weise die Möglichkeit, Wärmeenergie wiederzugewinnen und somit den Energieverbrauch insgesamt zu verringern, ohne daß dazu ein separater Wärmeaustauscher notwendig wäre.

**DIPL.-ING. HELMUT KOEPSELL**
PATENTANWALT

5 KÖLN 1, 13. 11. 80
Mittelstrasse 7
Telefon (02 21) 21 94 23
Telegrammadresse: Koepsellpatent Köln

003 0341

Vølund Vaskerimaskiner A/S

| V1/101 |
| --- |

Reg.-Nr. bitte angeben

Trommelwaschmaschine

Die Erfindung betrifft eine Trommelwaschmaschine mit einer gelochten Waschtrommel, die in einem zylindrischen Mantel drehbar angeordnet ist, der mindestens eine Zuflussvorrichtung für kaltes Leitungswasser und eine Abflussvorrichtung für schmutziges Waschwasser aufweist und mit einem oder mehreren Heizelementen zur Aufheizung des zugeführten Wassers versehen sein kann.

Bei solchen Waschmaschinen ist es bekannt, das schmutzige Waschwasser vor Ableitung in die Kanalisation durch einen separaten Wärmeaustauscher zu leiten, so dass ein Teil jener Wärme, die dem Waschwasser zugeführt worden war, zurückgewonnen werden kann. Solche separaten Wärmeaustauscher sind aber verhältnismässig teuer verglichen mit der Wärmemenge, die sich rückgewinnen lässt. Desweiteren wird ein separater Wärmeaustauscher, der in herkömmlicher Art und Weise ausgeführt ist, oft durch Fasern verstopft werden, die sich beim Waschen von der Wäsche lösen. Diese Verstopfung bewirkt eine Herabsetzung der Effektivität des Wärmeaustauschers und macht eine häufig wiederkehrende Reinigung notwendig, was eine gewisse Zeit in Anspruch

0030341

nimmt.

Es ist ein wesentliches Ziel der Erfindung, diese Nachteile zu vermeiden. Insbesondere soll der Aufbau der Trommelwaschmaschine bei guter Effektivität des Wärmetauschers einfach und übersichtlich sein. Die Gefahr von Verstopfungen soll beseitigt oder doch zumindest weitgehend verringert werden.

Die Erfindung schlägt demzufolge vor, dass der Mantel doppelwandig ausgeführt ist und dass der Raum zwischen den beiden Wänden des Mantels in der Gebrauchsstellung der Trommelwaschmaschine oben mit einer Zuflussvorrichtung für kaltes Leitungswasser und auf der anderen Seite einer die Wände des Mantelteiles verbindenden Querwand mit einer Abflussvorrichtung für vorgewärmtes Leitungswasser versehen ist.

Durch diese Ausgestaltung werden mehrere Vorteile erzielt. Kaltes Leitungswasser kann durch den Zwischenraum geleitet werden, während der die Trommel aufnehmende von der Innenwand des Mantels begrenzte Innenraum erwärmtes Wasch- oder Spülwasser enthält, so dass das Leitungswasser innerhalb des Zwischenraumes vorgewärmt wird, wobei gleichzeitig das Wasser im Innenraum gekühlt wird, ehe es in die Kanalisation abfliesst. Der auf diese Weise erzielte Wärmeaustausch hat sich als wirksamer herausgestellt als bei einem separatem Wärmeaustauscher. Die bei letzterem bestehende Gefahr einer Verstopftung wird vermieden.

Es ist weiterhin vorteilhaft, den von den beiden Wänden des Mantels begrenzten Zwischenraum unten mit einem Ablaßstutzen zu versehen. Hierdurch ist es möglich, das Wasser restlos aus dem Zwischenraum abfliessen zu lassen. Der Mantel kann dann als effektive Isolierung, wenn er nicht als Wärmetauscher benutzt wird, wirken.

Es ist möglich, den Zwischenraum im Mantel zur Speicherung des vorgewärmten Leitungswassers zu benutzen. Dies hängt im Ergebnis von der Menge des pro Arbeitsgang benötigten Wassers und vom Volumen des Zwischenraumes ab. Allerdings wird eine effektivere Abkühlung der im Innenraum befindlichen Waschflotte und damit ein weitergehender Übergang der in ihr enthaltenen Wärme auf das Leitungswasser im allgemeinen dann erreicht, wenn die Waschmaschine mit einem Speicherbehälter für das vorerwähnte Leitungswasser versehen ist, so dass im Ergebnis das zugeführte Frisch- oder Leitungswasser den Zwischenraum des Mantels lediglich durchfliesst, also nur die für das Druchfliessen notwendige Zeit in ihm verbleibt. Der Speicherraum sollte aussenseitig mit einer geeigneten Isolierung versehen sein. Eine solche könnte auch aussenseitig an der äusseren Wand des Mantels angebracht sein.

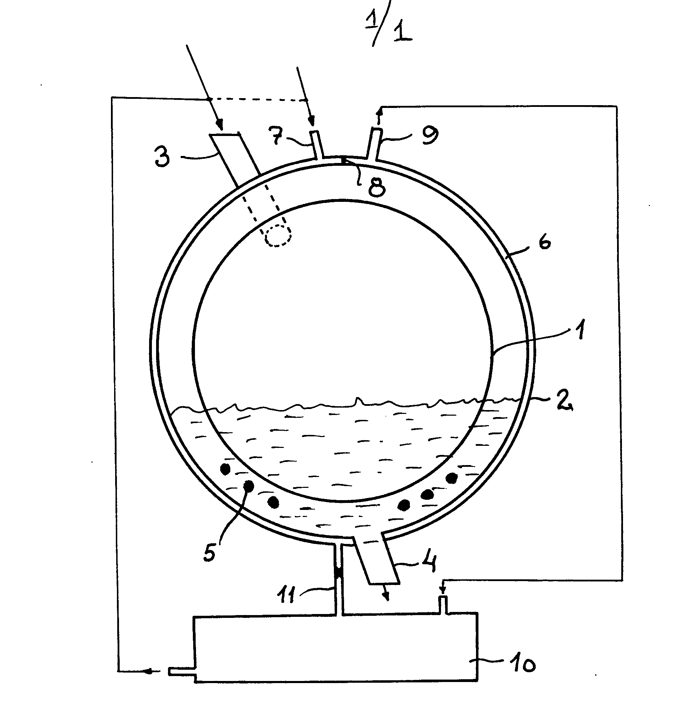

Weitere Merkmale und Vorteile ergeben sich im Zusammenhang mit der folgenden Beschreibung eines Ausführungsbeispiels der Erfindung, das in der Zeichnung dargestellt ist, die

- 4 -

einen senkrechten Schnitt durch eine im Schema dargestellte Trommelwaschmaschine zeigt.

Letztere ist mit einer gelochten Waschtrommel 1 versehen, die in einem von einem zylindrischen Mantel 2 begrenzten Innenraum drehbar angeordnet ist. Der Mantel weist eine Zuflussvorrichtung 3 für kaltes Leitungswasser und eine Abflussvorrichtung 4 für schmutziges Waschwasser, Spülwasser oder dgl. auf. Er ist ferner mit Heizelementen 5 zur Erwärmung des zugeführten Leitungswassers versehen.

Zufluss und Abfluss von Wasser in Verbindung mit dem Mantel, Erwärmung des Wassers und Bewegung der Trommel werden auf übliche Art durch ein nicht dargestelltes Programmschaltwerk gesteuert.

Der Mantel 2 ist doppelwandig ausgebildet. Der zwischen beiden Wänden befindliche Ringraum 6 ist oben mit einer Zuflussvorrichtung 7 für kaltes Leitungswasser verbunden. Weiterhin ist oben eine Abflussvorrichtung 9 für vorgewärmtes Leitungswasser vorgesehen, die jedoch auf der anderen Seite einer im Zwischenraum 6 parallel zur Längsachse der Trommel und des Mantels verlaufenden Trennwand 8 angeordnet ist. Ferner ist ein Speicherbehälter 10 vorgesehen, der in eine Verbindungsleitung zwischen Ausflußstutzen 9 und Zuleitung 3 eingeschaltet ist, durch die das vorgewärmte Wasser in den Innenraum des Mantels 2 gelangt, in welchem auch die Waschtrommel 1 angeordnet ist. Im unteren Scheitelpunkt des Zwischenraumes 6 ist ein mit einem Absperrorgan versehener Ablaßstutzen 11 vorgesehen, durch den der Zwischenraum 6 vollständig entleert werden kann. Bei dem in der Zeichnung dargestellten Ausführungsbeispiel ist dieser Stutzen 11 ebenfalls mit dem Speicherraum verbunden. Es ist aber auch möglich, den Stutzen 11 ausschliesslich oder wahlweise mit dem Kanalisationssystem für das Abwasser zu verbinden.

Zufluss und Abfluss von Wasser in Verbindung mit dem Zwischenraum 6 und dem Speicherbehälter 10 werden vom vorerwähnten Programmschaltwerk gesteuert. Hierbei wird vorausgesetzt, dass die Waschmaschine mit üblichen Mitteln, beispielsweise einer Pumpe, versehen ist, die das Umwälzen des Wassers, beispielsweise das Bewegen des Wassers aus dem Speicherraum 10 über den Einlass 3 in den Innenraum bewirkt.

Bevor die im Innenraum befindliche Flüssigkeit nach Gebrauch in die Kanalisation abgelassen wird, wird Leitungswasser oder vorgewärmtes Wasser aus dem Speicherbehälter 10 durch den Zwischenraum 6 geleitet. Aufgrund des Vorhandenseins der Trennwand 8 ist das Wasser gezwungen, nahezu den gesamten Umfang des Mantels zu durchströmen, also auch jenen Umfangsbereich, dessen Innenwand in Kontakt mit dem heissen Wasch- oder Spülwasser ist. Hierdurch wird das Frischwasser im Zwischenraum 6 bei gleichzeitiger Abkühlung der im Innenraum befindlichen verbrauchten Flüssigkeit erwärmt, ehe letztere in die Kanalisation geleitet wird. Mithin kann ein erheblicher Teil der in der verbrauchten Flüssigkeit noch vorhandenen Wärme wiedergewonnen werden. Das vorgewärmte Leitungswasser kann beim nächsten Arbeitsgang, der Frischwasser benötigt, in den Innenraum eingeleitet werden. In Abhängigkeit von den gegebenen Verhältnissen kann das Frischwasser einmal oder auch mehrere Male durch den Zwischenraum 6 hindurchgeführt werden. Bei nur einmaliger Hindurchführung würde das den Ringraum 6 durch den Auslaßstutzen 9 verlassende vorgewärmte Wasser direkt durch den Einlass 3 in den Innenraum geleitet. Im anderen Fall würde das nach dem ersten Umlauf den Zwischenraum 6 durch den Auslaßstutzen 9 verlassende vorgewärmte Wasser durch den Einlaßstutzen 7 erneut in den Ringraum 6 geführt werden, so dass es eine weitere Vorwärmung mit entsprechender Temperatursteigerung erfährt. Die Anzahl der Umläufe hängt von den jeweiligen Gegebenheiten ab. Auch hier gilt, dass durch ein übliches Programmschaltwerk eine Anpassung an unterschiedliche Gegebenheiten auf einfache Weise möglich ist.

Gewisse Textilien, z. B. bügelfreie Textilien, bedürfen einer langsamen Abkühlung nach dem Waschen. Dies wird bei bekannten Waschmaschinen durch Hinzufügen kalten Wassers in das Waschwasser erreicht, so dass letztere langsam abgekühlt wird. Bei der Waschmaschine gemäss der Erfindung erfolgt die Abkühlung des Wasch- oder Spülwassers dadurch, dass es Wärme an das Wasser im Zwischenraum 6 abgibt. Da-

0030341

durch wird der zusätzliche Vorteil erreicht, dass der Wasserverbrauch geringer ist als bei bekannten Waschmaschinen.

Wenn die Heizelemente 5 dem Wasser im Innenraum weitere Wärme zuführen, ist der Zwischenraum normalerweise durch den Ablaßstutzen 6 vollständig entleert, so dass der Zwischenraum 6 als Isolation wirkt mit dem Ergebnis, dass die Aufheizperiode abgekürzt und der Verbrauch an elektrischer Energie zwecks Aufheizen der Flüssigkeit reduziert wird.

Abweichend von der in der Zeichnung dargestellten Ausführung kann die Anordnung auch so getroffen sein, dass die Zuführung des Frischwassers in den Ringraum 6 hinein und die Ableitung des vorerwähnten Wassers aus dem Ringraum in den Speicher 10 und/oder in den Innenraum des Mantels im unteren Bereich des letzteren angeordnet sind. Entsprechendes gelte dann auch für die Trennwand 8. Auch die Zuführung 3 in den Innenraum hinein könnte im unteren Bereich angeordnet sein.

**DIPL.-ING. HELMUT KOEPSELL**
PATENTANWALT

5 KÖLN 1 , 13. 11. 80
Mittelstrasse 7
Telefon (02 21) 21 94 23
Telegrammadresse: Koepsellpatent Köln

0030341

Võlund Vaskerimaskiner A/S

V1/101

Reg.-Nr. bitte angeben

Patentansprüche:

1. Trommelwaschmaschine mit einer gelochten Waschtrommel, die in einem zylindrischen Mantel drehbar angeordnet ist, und einem Wärmeaustauscher, wobei der Mantel mindestens eine Zuflussvorrichtung für Frischwasser und eine Abflussvorrichtung für verbrauchte Flüssigkeit aufweist und mit einem oder mehreren Heizelementen zur Erwärmung des zugeführten Frischwassers versehen ist, dadurch gekennzeichnet, dass der Mantel (2) doppelwandig ausgebildet und der Raum (6) zwischen den beiden Wänden des Mantels (2) in der Gebrauchsstellung der Trommelwaschmaschine vorzugsweise oben mit einer Zuflussvorrichtung (7) für Frischwasser und auf der anderen Seite einer innerhalb des Zwischenraumes (6) angeordneten Trennwand (8) mit einer Abflussvorrichtung (9) für vorgewärmtes Leitungswasser versehen ist.

2. Trommelwaschmaschine nach Anspruch 1, dadurch gekennzeichnet, dass der Zwischenraum (6) unten einen Ablaßstutzen (11) hat.

3. Trommelwaschmaschine nach Anspruch 1 oder 2, dadurch gekennzeichnet, dass ein Speicherbehälter (10) für das vorgewärmte Leitungswasser vorgesehen ist.